# EUROPEAN PATENT APPLICATION

(11) **EP 3 173 536 A1**
(43) Date of publication of application: **31.05.2017**
(21) Application number: 16198210.3
(22) Date of filing: 10.11.2016
(51) Int. Cl.: E02F 3/627, B62D 21/02, B62D 49/04, B62D 49/06, E02F 3/815, E01H 5/06

(54) **FASTENING FRAME FOR WORK VEHICLE TO BE EQUIPPED WITH A BLADE**

(30) Priority: 20.11.2015 FI 20155861
(71) Applicant: Pajakulma Oy, 33840 Tampere (FI)
(72) Inventor: Joenniemi, Joni, 33840 Tampere (FI); Kulku, Mika, 33840 Tampere (FI)
(74) Representative: Kolster Oy Ab

(57) **Abstract**

A fastening frame (6) for providing a work vehicle with a lower blade (5) comprises a frame structure (7) having a front part (7') to be directed in a direction of a front end of the work vehicle and a rear part (7") to be directed in a direction of a rear end thereof, at least one locking device of a front part (6') of the fastening frame (6) arranged in connection with the front part (7') of the frame structure (7) for fastening the fastening frame (6) at its front part (6') to the work vehicle, at least one locking device of a rear part (6") of the fastening frame (6) arranged in connection with the rear part (7") of the frame structure (7) for fastening the fastening frame (6) at its rear part (6") to the work vehicle, and means for fastening the lower blade (5) to the fastening frame (6). The locking device of the front part (6') comprises a first locking device part to be fastened to the work vehicle and a second locking device part detachable from the first locking device part and fastened to the frame structure (7) of the fastening frame (6), and the locking device of the rear part (6") comprises a first locking device part to be fastened to the work vehicle and a second locking device part detachable from the first locking device part and fastened to the frame structure (7) of the fastening frame (6).

## Description

### Background of the invention

The invention relates to a work vehicle provided with a lower blade.

Work vehicles, such as tractors for instance, that are provided with a lower blade may be used for instance for snow ploughing or levelling gravel roads or other large areas with gravel or sand surfaces. A lower blade is usually fastened in connection with the frame of the tractor by means of various fasteners such that it is not easily and quickly detachable from the tractor. In such a case, such a tractor provided with a lower blade is not quickly convertible into a tractor to be used in field or forest work, for which tasks the lower blade should be removed in order to increase the ground clearance of the tractor.

### Brief description of the invention

An object of the invention is to provide a fastening frame for a work vehicle for providing the work vehicle with at least one lower blade.

The fastening frame according to the invention is characterized in that the fastening frame comprises a frame structure having a front part to be directed in a direction of a front end of the work vehicle, and a rear part to be directed in a direction of a rear end of the work vehicle, at least one locking device of a front part of the fastening frame arranged in connection with the front part of the frame structure for fastening the fastening frame at its front part to the work vehicle, at least one locking device for the rear part of the fastening frame arranged in connection with the rear part of the frame structure for fastening the fastening frame at its rear part to the work vehicle, and means for fastening the lower blade to the fastening frame, wherein the locking device of the front part comprises a first locking device part to be fastened to the work vehicle and a second locking device part detachable from the first locking device part and fastened to the frame structure of the fastening frame, and wherein the locking device of the rear part comprises a first locking device part to be fastened to the work vehicle and a second locking device part detachable from the first locking device part and fastened to the frame structure of the fastening frame.

The work vehicle according to the invention is characterized in that the work vehicle comprises a fastening frame according to any one of claims 1 to 9.

The work vehicle may be a work machine, such as a tractor, an excavator-loader, a wheeled excavator or a thresher. The work vehicle may also be a truck, such as a truck to be used in normal road traffic that can be converted for instance into a road maintenance vehicle by providing it for instance with one or more ploughs and possibly devices intended for spreading gravelling sand and/or salt solution.

The fastening frame is fastened to the work vehicle by locking devices provided at the front part and the rear part of the fastening frame. The locking devices comprise a first locking device part to be fastened to the work vehicle, and a second locking device part fastened to the frame structure of the fastening frame and detachable from the first locking device part. While detaching the lower blade from the work vehicle, the second locking device parts are detached from the first locking device parts, in which case the frame structure of the fastening frame and the second locking device parts in connection therewith as well as the lower blade become detached from the work vehicle.

An advantage of the disclosed fastening frame is that it is easy and quick to detach from the work vehicle and fasten to the work vehicle, in which case the lower blade that is fastened to the fastening frame may be easily and quickly detached from the work vehicle and fastened to the work vehicle without instruments. In such a case, for instance a tractor provided with a lower blade is easily and quickly convertible into a tractor suitable to field or forest work without the lower blade restricting the ground clearance of the tractor.

Some embodiments of the invention are disclosed in the dependent claims.

### Brief description of the figures

The invention is now described in closer detail in connection with preferred embodiments and with reference to the accompanying drawings, in which
Figure 1 is a schematic front view showing, as seen obliquely from above, a tractor and, mounted therein, a lower blade fastening frame and a lower blade,
Figure 2 is a schematic front view showing, as seen obliquely from below, the tractor according to Figure 1,
Figure 3 is a schematic front view showing, as seen obliquely from above, a lower blade fastening frame and a lower blade mounted thereto,
Figure 4 is a schematic rear view showing, as seen obliquely from above, the fastening frame according to Figure 3 and the lower blade mounted thereto,
Figure 5 is a schematic front view showing, as seen obliquely from above, a frame structure of the fastening frame according to Figures 3 and 4,
Figure 6 is a schematic rear view showing, as seen obliquely from above, a frame structure of the fastening frame according to Figure 5,
Figure 7 is a schematic side view showing a locking device of a front part of the fastening frame,
Figure 8 is a schematic front view showing, as seen obliquely from above, locking devices of the front part of the fastening frame according to Figure 7, and
Figure 9 is a schematic side view showing a locking device of a rear part of the fastening frame.

For the sake of clarity, the figures show some embodiments of the invention in a simplified manner. In the figures, like reference numerals identify like elements.

### Detailed description of the invention

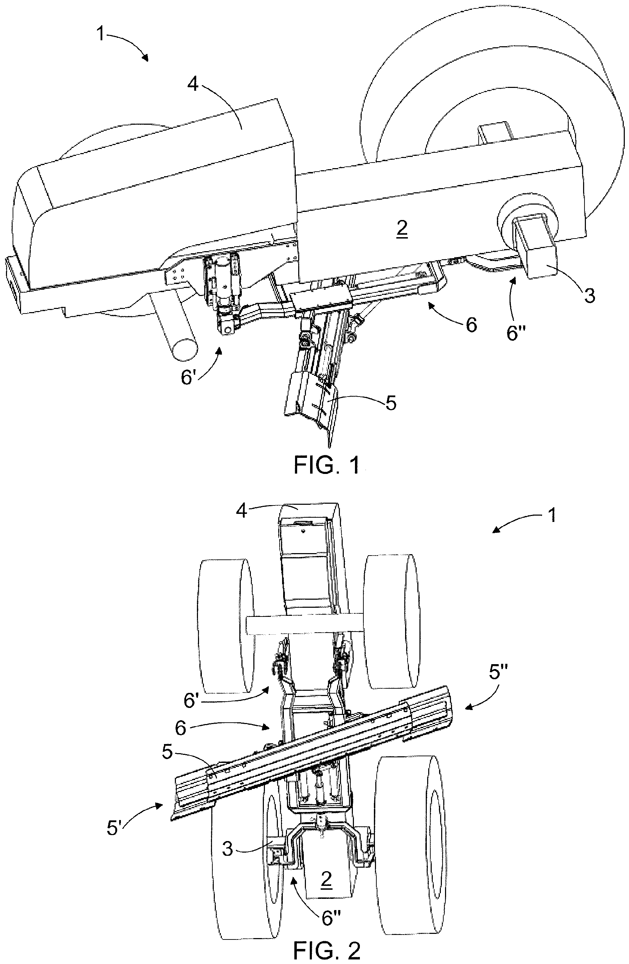

Figure 1 is a schematic front view showing, as seen obliquely from above, a tractor 1. Figure 2 is a schematic front view showing, as seen obliquely from below, the tractor 1 according to Figure 1. The tractor 1 comprises, inter alia, a frame 2 and a rear axle system of which, for the sake of clarity, Figure 1 only shows a shell 3 of a rear axle. The tractor 1 further comprises a motor located underneath a motor cover 4. For the sake of clarity, no second front wheel and no second rear wheel as well as no control cabin of the tractor are shown in Figures 1 and 2.

The tractor 1 shown in Figures 1 and 2 further comprises a lower blade 5 fastened to the tractor 1 by means of a fastening frame 6 of the lower blade 5 to be placed between the tractor 1 and the lower blade 5. The fastening frame 6 has a front part 6' to be directed in a direction of a front end of the tractor 1, and a rear part 6" to be directed in a direction of a rear end of the tractor 1. The tractor 1 provided with the lower blade 5 may be used for instance for snow ploughing or for levelling out gravel roads or other large areas with gravel or sand surfaces.

The tractor 1 is an example of a work vehicle representing a work vehicle wherein the fastening frame 6 may be used for fastening the lower blade 5 to the work vehicle. The work machine constituting the work vehicle may also be for instance an excavator-loader, a wheeled excavator or a thresher. The work vehicle may also be a truck, such as a truck to be used in normal road traffic that can be converted for instance into a road maintenance vehicle by providing it with the lower blade 5 that can be fastened under the truck by means of the fastening frame 6. Further, a truck may be provided with a front plough and possibly with devices intended for spreading gravelling sand and/or salt solution.

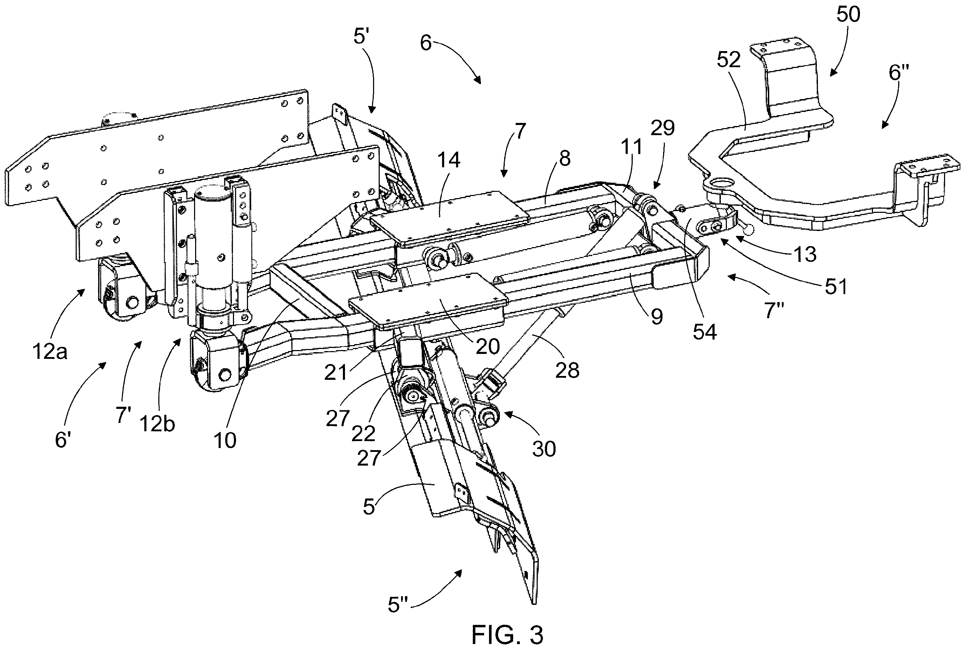

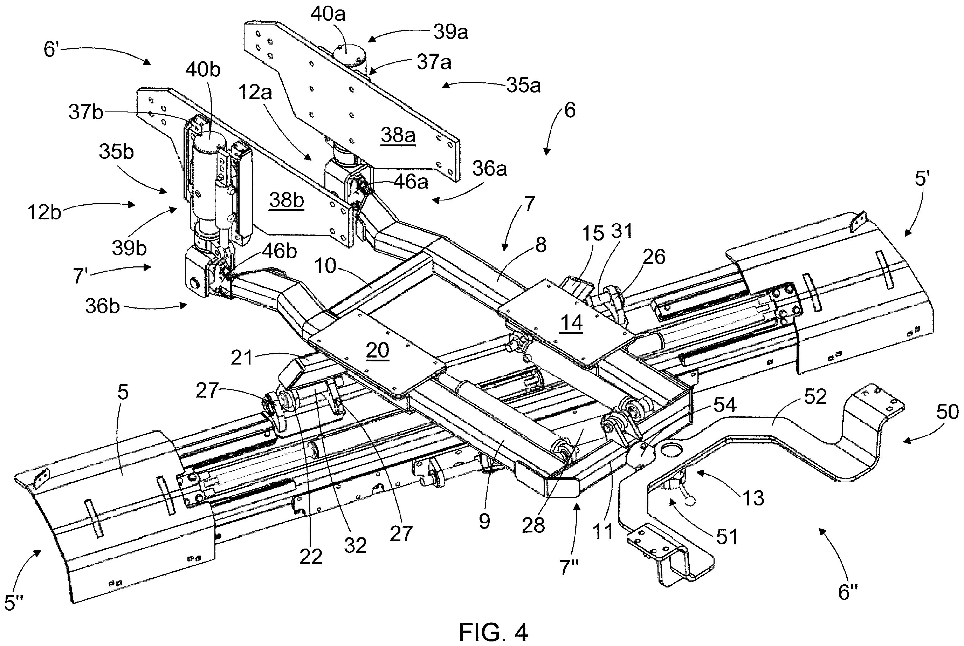

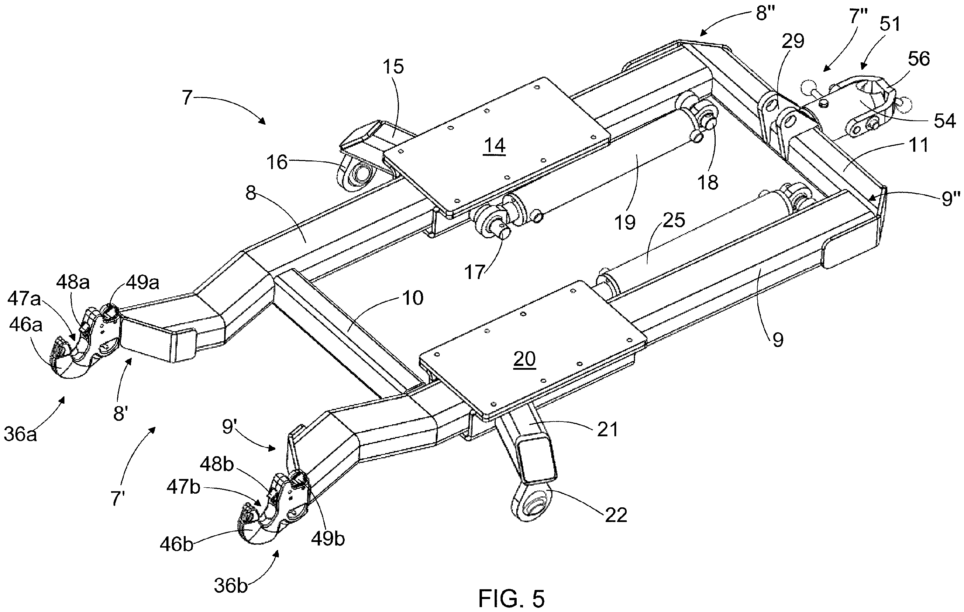

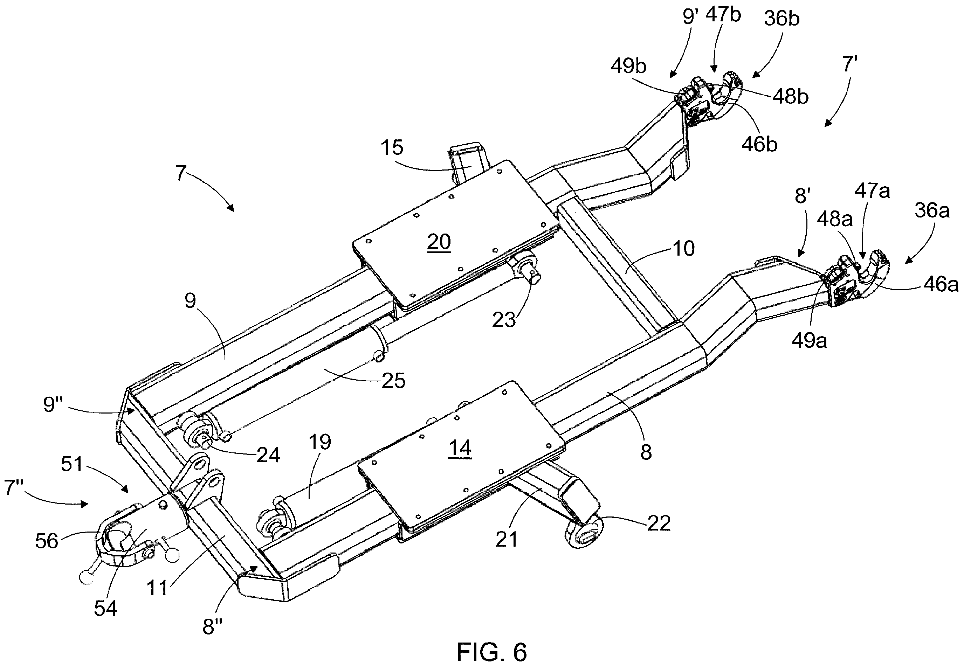

Figure 3 is a schematic front view showing, as seen obliquely from above, the fastening frame 6 of the lower blade 5 according to Figure 1 and the lower blade 5 mounted thereto. Figure 4 is a schematic rear view showing, as seen obliquely from above, the fastening frame 6 according to Figure 3 and the lower blade 5 mounted thereto. Figure 5 is a schematic front view showing, as seen obliquely from above, a frame structure 7 of the fastening frame 6 according to Figures 3 and 4. The frame structure 7 has a front part 7' to be directed in a direction of a front end of the tractor 1, and a rear part 7" to be directed in a direction of a rear end of the tractor 1. Figure 6 is a schematic rear view showing, as seen obliquely from above, the frame structure 7 of the fastening frame 6 according to Figure 5.

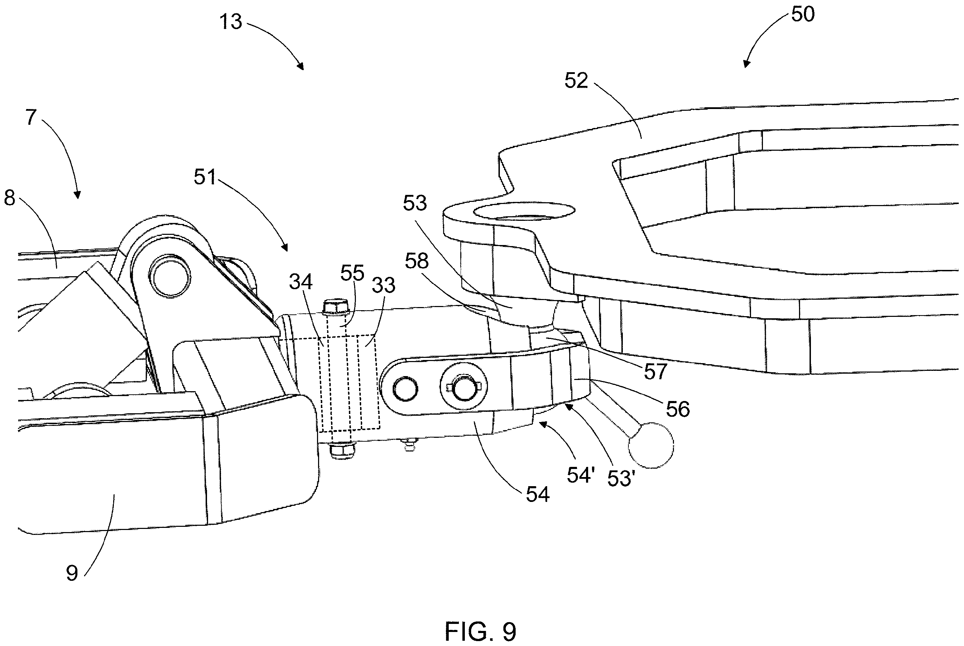

In the embodiment shown in the figures, the frame structure 7 of the fastening frame 6 comprises two longitudinal beams 8, 9 spaced apart from one another, i.e. a first longitudinal beam 8 and a second longitudinal beam 9. The longitudinal beams 8, 9 have a front end 8', 9' directed in a direction of the front part 7' of the frame structure 7, and a rear end 8", 9" directed in a direction of the rear part 7" of the frame structure 7. Further, in the embodiment shown in the figures, the frame structure 7 of the fastening frame 6 comprises two transverse beams 10, 11 running, spaced apart from one another, in a direction transverse to said longitudinal beams 8, 9 and being attached for instance by welding to said longitudinal beams 8, 9, at the front part 7' of the frame structure 7 a first transverse beam 10 attached between the longitudinal beams 8, 9 and, at the rear part 7" of the frame structure 7 a second transverse beam 11 attached between the rear ends 8", 9" of the longitudinal beams 8, 9. The frame structure 7 of the fastening frame 6 further comprises at the rear part of the fastening frame a support element 33 attached to the second transverse beam 11 of the frame structure 7 and pointing substantially horizontally backwards away from the frame structure 7 of the fastening frame 6 and comprising an opening 34 running substantially in a vertical direction through the support element 33. Said support element 33 and the opening 34 formed therethrough are schematically shown in broken lines in Figure 9.

In the embodiment shown in the figures, the width of the frame-like frame structure 7 formed by the longitudinal beams 8, 9 and the transverse beams 10, 11 remains substantially the same in a longitudinal direction of the frame structure 7. i.e. when moving from a direction of the front part 7' of the frame structure 7 towards the rear part 7" of the frame structure 7. However, depending on the embodiment of the fastening frame 6, the width of said frame-like frame structure 7 could also change, i.e. either increase or decrease, in the longitudinal direction of the frame structure 7.

In the embodiment of the frame structure shown in the figures, the longitudinal beams 8, 9 and the transverse beams 10, 11 are made from rectangular tubular beams, but the practical implementation of the longitudinal beams 8, 9 and the transverse beams 10, 11 may vary. Further, embodiments of the frame structure 7 different from the one shown in the figures are also possible.

The fastening frame 6 further comprises locking devices 12a, 12b of the front part 6' of the fastening frame 6 arranged in connection with the front part 7' of the frame structure 7 of the fastening frame 6, i.e. a first locking device 12a of the front part 6' of the fastening frame 6 and a second locking device 12b of the front part 6' of the fastening frame 6, by means of which the fastening frame 6 is fastened to the tractor 1 at the front part 6' of the fastening frame 6. The structure and operation of the locking devices 12a, 12b of the front part 6' of the fastening frame 6 will be discussed below, referring to Figures 3, 4, 5, 7 and 8 in particular. The fastening frame 6 further comprises a locking device 13 of the rear part 6" of the fastening frame 6 arranged in connection with the rear part 7" of the frame structure 7 of the fastening frame 6, by means of which the fastening frame 6 is fastened to the tractor 1 at the rear part 6" of the fastening frame 6. The structure and operation of the locking device 13 of the rear part 6" of the fastening frame 6 will be discussed below, referring to Figures 3, 4, 5, 6 and 9 in particular.

The fastening frame 6 is further provided with a first slide element 14 arranged in connection with the first longitudinal beam 8 of the frame structure 7 such that the first slide element 14 is allowed to move, supported by the longitudinal beam 8, in a longitudinal direction of the longitudinal beam 8. The fastening frame 6 is further provided with a second slide element 20 arranged in connection with the second longitudinal beam 9 of the frame structure 7 such that the second slide element 20 is allowed to move, supported by the longitudinal beam 9, in a longitudinal direction of the longitudinal beam 9. The slide elements 14, 20 are further provided with support elements 15, 21 pointing outwards from the frame structure 7 of the fastening frame 6 and being provided with fastening lugs 16, 22 in connection therewith. Upon fastening the lower blade 5 to the fastening frame 6, the fastening lug 16 is placed between fastening lugs 26 located in the lower blade 5, and the fastening lug 22 is placed between fastening lugs 27 located in the lower blade 5. Via openings provided in said fastening lugs 16, 26 and 22, 27 are arranged fastening pins 31, 32 so as to lock, via said fastening lugs 16, 26 and 22, 27, the lower blade 5 to the slide elements 14, 20. Said slide elements 14, 20 thus form some possible means for fastening the lower blade 5 to the fastening frame 6.

An inner edge of the first slide element 14, i.e. a portion directed towards the second longitudinal beam 9 of the frame structure 7, is provided with a fastening pin 17. Further, an inner edge of the first longitudinal beam 8, i.e. a side of the first longitudinal beam 8 pointing towards the second longitudinal beam 9, is provided with a fastening pin 18. To the fastening pins 17, 18 may be attached a first actuating cylinder 19 settling therebetween in parallel with the first longitudinal beam 8 and enabling the first slide element 14 to be moved on the first longitudinal beam 8, i.e. the position of the first slide element 14 to be changed on the first longitudinal beam 8, thus allowing the position of a first end 5' of the lower blade 5 to be changed in the longitudinal direction of the tractor 1.

Correspondingly, an inner edge of the second slide element 20, i.e. a portion directed towards the first longitudinal beam 8, is provided with a fastening pin 23. Further, an inner edge of the second longitudinal beam 9, i.e. the side of the second longitudinal beam 9 pointing towards the first longitudinal beam 8, is provided with a fastening pin 24. To the fastening pins 23, 24 may be attached a second actuating cylinder 25 settling therebetween in parallel with the second longitudinal beam 9 and enabling the second slide element 20 to be moved on the second longitudinal beam 9, i.e. the position of the second slide element 20 to be changed on the second longitudinal beam 9, thus allowing the position of a second end 5" of the lower blade 5 to be changed in the longitudinal direction of the tractor 1.

The actuating cylinders 19, 25 enable a release angle of the lower blade 5 to be changed by changing the position of the slide elements 14, 20 on the longitudinal beams 8, 9, the release angle of the blade 5 providing a measure as to how much one end of the blade 5 is ahead of the other end of the blade 5. The longitudinal beams 8, 9 may further be provided with limiters to limit the possible path of travel of the slide elements 14, 20 on the longitudinal beams 8, 9 to a portion of the longitudinal beams 8, 9 that the lower blade 5 cannot be turned into a release angle where the lower blade 5 could harm the tractor 1 or other accessories fastened thereto.

As distinct from the embodiment shown in the figures, the actuating cylinders 19, 25 and the fastening pins 17, 18, 23, 24 used for their fastening may also be fastened to portions of the slide elements 14, 20 and the longitudinal beams 8, 9 pointing in directions other than those shown above. In their above-disclosed position, however, the actuating cylinders 19, 25 are best protected from external impacts, causing no limitations as to the positioning of the fastening frame 6 in the tractor 1.

The fastening frame 6 further comprises a pressing cylinder 28 used for adjusting the position of the lower blade 5 in the vertical direction of the lower blade 5, i.e. in the height direction of the tractor 1. The pressing cylinder 28 may also be used for affecting the force with which the lower blade 5 impacts the surface to be ploughed. In the embodiment shown in the figures, the pressing cylinder 28 is on the fastening frame 6 side fastened to fastening lugs 29 arranged in the second transverse beam 11 of the frame structure 7 of the fastening frame 6 and, on the lower blade 5 side, to fastening lugs 30 provided in a lower part of the lower blade 5.

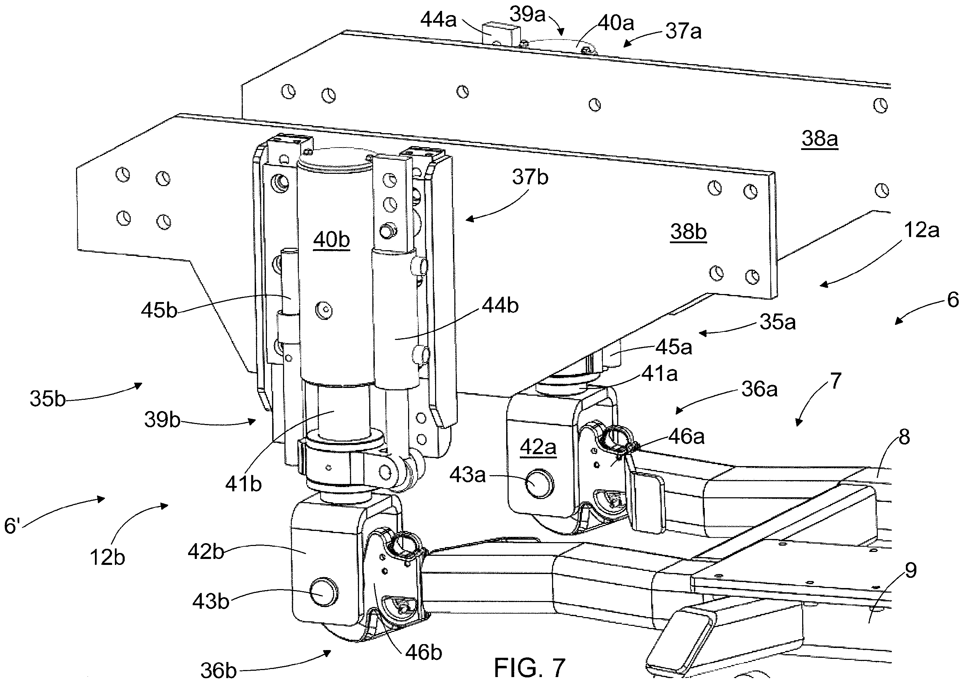

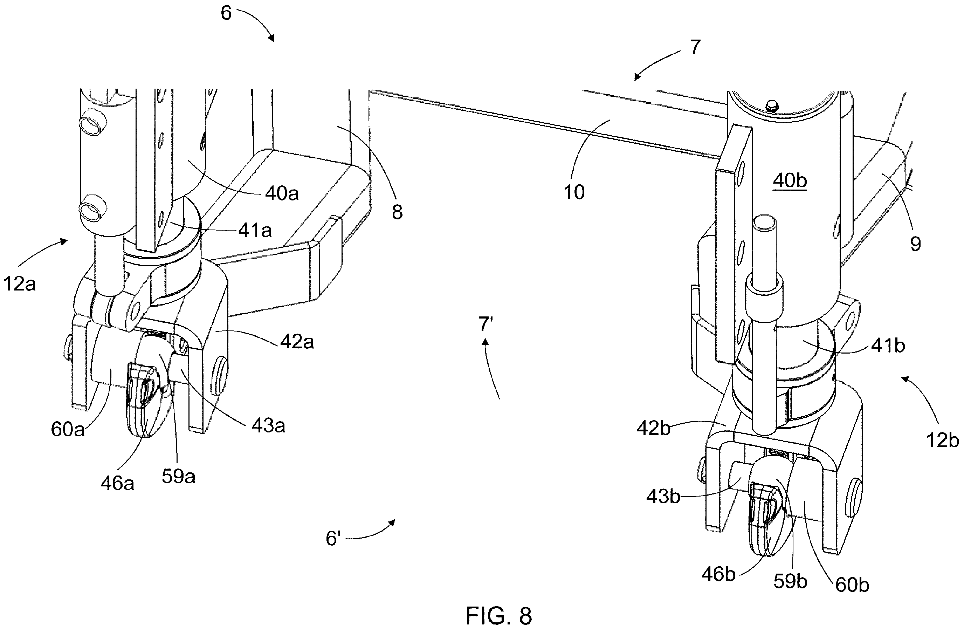

Figure 7 is a schematic side view showing the first locking device 12a and the second locking device 12b of the front part 6' of the fastening frame 6 shown in Figures 3 and 4. Figure 8 is a schematic front view showing, as seen obliquely from above, the locking devices 12a, 12b of the front part 6' of the fastening frame 6 according to Figure 7. The structure and operation of the locking devices 12a, 12b of the front part 6' of the fastening frame 6 are substantially similar and will be discussed together, referring to Figures 3, 4, 5, 6, 7 and 8. The locking device 12a, 12b comprises a first locking device part 35a, 35b to be fastened to the tractor 1, and a second locking device part 36a, 36b fastened in connection with the frame structure 7 of the fastening frame 6. The second locking device part 36a, 36b is detachable from the first locking device part 35a, 35b, in which case the fastening frame 6 and the lower blade 5 attached thereto is detachable on the front part 6' of the fastening frame 6 by detaching the second locking device part 36a, 36b from the first locking device part 35a, 35b. In such a case, the first locking device part 35a, 35b remains attached to the tractor 1 while the second locking device part 36a, 36b becomes detached from the tractor 1 along with the frame structure 7 of the fastening frame 6.

The first locking device part 35a, 35b comprises a fastening flange structure 37a, 37b forming a possible fastening element for fastening the locking device 12a, 12b to the tractor 1, for instance to the frame 2 of the tractor 1 or to the frame of the motor of the tractor 1. The fastening flange structure 37a, 37b is fastened for instance by bolts to the frame 2 of the tractor 1. The first locking device part 35a, 35b may also comprise a fastening plate 38a, 38b to be fastened to the frame 2 of the tractor 1 and to which the fastening flange structure 37a, 37b is fastened.

The first locking device part 35a, 35b according to the figures further comprises a tilting device 39a, 39b enabling the front part 6' of the fastening frame 6 to be lifted and lowered with respect to the tractor 1. The tilting device 39a, 39b includes a tilting leg 40a, 40b whose inner leg 41 a, 41 b at its outermost end is provided with a support element 42a, 42b having a support pin 43a, 43b. Around the support pin 43a, 43b, it is possible to arrange a ball 59a, 59b so as to enable the second locking device part 36a, 36b of the locking device 12a, 12b to be fastened in connection therewith. The fastening frame 6 is thus at its front part 6' supported by said support elements 42a, 42b when the fastening frame 6 is fastened to the tractor 1.

The tilting device 39a, 39b further includes a tilting cylinder 44a, 44b to move the inner leg 41 a, 41 b of the tilting leg 40a, 40b, and a guide 45a, 45b to prevent the inner leg 41 a, 41 b from rotating upon using the tilting leg 40a, 40b. The tilting legs 40a, 40b, together with a swivel structure provided at the rear part 6" of the fastening frame 6 and to be discussed below, enable the lower blade 5 to be tilted by tilting the frame structure 7 of the fastening frame 6, making it possible to use the lower blade 5 for shaping the inclination of the surface being worked. Figure 8 further shows a rubber bushing 60a, 60b which can be arranged next to the ball 59a, 59b, around the support pin 43a, 43b, and which allows a lateral displacement of the ball 59a, 59b and the second locking device part 36a, 36b of the locking device 12a, 12b connected in connection therewith due to the tilt of the fastening frame.

If the tilt of the lower blade 5 is unnecessary, the tilting device 39a, 39b may be omitted and the support element 42a, 42b may be fastened directly to the fastening flange structure 37a, 37b.

In the embodiment shown in the figures, the second locking device part 36a, 36b comprises a quick couple grab 46a, 46b forming a locking element arranged to lock to the balls 59a, 59b arranged in connection with the support pin 43a, 43b of the support element 42a, 42b. The quick couple grabs 46a, 46b are fastened in connection with the first ends 8', 9' of the longitudinal beams 8, 9 of the frame structure 7 of the fastening frame 6.

When locking the second locking device part 36a, 36b to the first locking device part 35a, 35b, the quick couple grab 46a, 46b is pressed against the ball 59a, 59b of the support element 42a, 42b. In such a case, the ball 59a, 59b is pressed in to a coupling space 47a, 47b restricted by the quick couple grab 46a, 46b, past a tongue 48a, 48b in said coupling space 47a, 47b, the quick couple grab 46a, 46b thus becoming locked to the ball 59a, 59b.

Similarly, when unlocking the locking between the first locking device part 35a, 35b and the second locking device part 36a, 36b, a loop 49a, 49b of the quick couple grab 46a, 46b provided in connection with the tongue 48a, 48b of said quick couple grab 46a, 46b is being pulled at, in which case said tongue is drawn backwards and the ball 59a, 59b is released from the coupling space 47a, 47b of the quick couple grab 46a, 46b, allowing the quick couple grab 46a, 46b to come off from around said ball 59a, 59b. The locking devices 12a, 12b thus form at the front part 6' of the fastening frame 6 an easily and quickly unlockable and lockable quick locking for fastening the fastening frame 6 to the tractor 1 and for detaching it from the tractor 1.

Figure 9 is a schematic side view showing the locking device 13 of the rear part 6" of the fastening frame 6 shown in Figures 3 and 4. The structure and operation of the locking device 13 of the rear part 6" of the fastening frame 6 will be discussed together, referring to Figures 3, 4, 5, 6 and 9. The locking device 13 comprises a first locking device part 50 to be fastened to the tractor 1 and a second locking device part 51 fastened to the frame structure 7 of the fastening frame 6 and detachable from the first locking device part 50, in which case the fastening frame 6 and the lower blade 5 attached thereto are detachable on the rear part 6" of the fastening frame 6 by detaching the second locking device part 51 from the first locking device part 50. In such a case, the first locking device part 50 remains attached to the tractor 1 while the second locking device part 51 becomes detached from the tractor 1 along with the frame structure 7 of the fastening frame 6.

The first locking device part 50 of the locking device 13 shown in Figure 9 comprises a ball frame 52 to be fastened to the tractor 1, forming a possible fastening element for fastening the locking device 13 to the tractor 1. The ball frame 52 may be fastened for instance by bolts to a rear axle 3 of the tractor 1, as schematically shown in Figure 2. Alternatively, the ball frame 52 may be fastened for instance to the frame 2 of the tractor 1. A fastening ball 53 is fastened to the ball frame 52, pointing downwards therefrom.

The second locking device part 51 of the locking device 13 shown in Figure 9 comprises a ball tulip 54 arranged to point backwards in a direction pointed by the rear part 7" of the frame structure 7 of the fastening frame 6, i.e. in a direction of the rear end of the tractor 1. The ball tulip 54 is arranged to receive the fastening ball 53 provided in the first locking device part 50. The ball tulip 54 is further provided with a locking collar 56 turnable via a joint and enabling the fastening ball 53 to be locked to the ball tulip 54.

The ball tulip 54 is fastened to a support element 33 fastened to the second transverse beam of the frame structure 7 provided at the rear part 7" of the frame structure 7 of the fastening frame 6 by a bolt 55 or another fastening means located in the opening 34 formed through said support element 33. The diameter of the bolt 55 is dimensioned to be smaller than the diameter of the opening 34, in which case a clearance is formed between the support element 33 and the ball tulip 54 to allow the ball tulip 54 to move with respect to the support element 33 in the longitudinal direction of the fastening frame 6. If the diameter of the bolt 55 is for instance 20 mm and the diameter of the opening 34 in the support element 33 is for instance 35 mm, said clearance is 15 mm.

In the embodiment shown in Figure 9, an outermost end 53' of the fastening ball 53, i.e. an end 53' away from the ball frame 52, is provided with a ball-like portion 57. An outermost end 54' of the ball tulip 54, i.e. an end pointing away from the frame structure 7 of the fastening frame 6, is provided with a notch 58 or a recess 58 whose shape and dimensions correspond to the shape and dimensions of the ball-like portion 57 of the fastening ball 53 such that the ball-like portion 57 is arranged to settle in said notch 58 substantially clearance-free when the fastening ball 53 is locked to the ball tulip 54. The ball-like portion 57 and the notch 58 thus form counterparts settling against one another when the fastening ball 53 is locked to the ball tulip 54. In such a case, the fastening ball 53 and the ball tulip 54 form at the rear part 6" of the fastening frame 6 a joint structure enabling the position of the frame structure 7 of the fastening frame 6 to change with respect to the tractor 1 at the rear part 6" of the fastening frame 6. Particularly the fastening ball 53 and the ball tulip 54 form a so-called three-way-tip-joint but said joint structure may also be implemented in other ways so as to achieve the same functionality.

When locking the second locking device part 51 to the first locking device part 50, the tractor 1 and/or the fastening frame 6 is/are moved such that the ball-like portion 57 of the fastening ball 53 settles in the notch 58 of the ball tulip 54 and the locking collar 56 is turned around the fastening ball 53. Similarly, when unlocking the locking between the first locking device part 50 and the second locking device part 51, the locking collar 56 is turned off from around the fastening ball 53 and the tractor 1 and/or the fastening frame 6 is moved such that the ball-like portion 57 of the fastening ball 53 moves away from the notch 58 of the ball tulip 54. The locking device 13 thus forms at the rear part 6" of the fastening frame 6 an easily and quickly unlockable and lockable quick locking for fastening the fastening frame 6 to the tractor 1 and for detaching it from the tractor 1.

When the fastening frame 6 and the lower blade 5 attached thereto are being detached from the tractor 1, the pressing cylinder 28 is used for guiding the lower blade 5 downwards such that the lower blade 5 rests lightly on the ground. Next, the quick couple grabs 46a, 46b are opened by pulling at their loops 49a, 49b, in which case the tongues 48a, 48b of the quick couple grabs 46a, 46b retract backwards. In such a case, the fastening frame 6 and, along therewith, the quick couple grabs 46a, 46b are slightly lowered around the balls 59a, 59b provided in the coupling spaces 47a, 47b of the quick couple grab 46a, 46b so that the tongues 48a, 48b of the quick couple grabs 46a, 46b no longer lock the balls 59a, 59b in the coupling spaces 47a, 47b of the quick couple grabs 46a, 46b. Next, via the pressing cylinder 28 the position of the lower blade 5 is further guided such that the fastening frame 6 and, along therewith, the quick couple grabs 46a, 46b are further lowered, in which case the quick couple grabs 46a, 46b in their entirety come off from around the balls 59a, 59b. The tilting legs 40a, 40b may also be used, i.e. lifted or lowered, to assist detachment of the quick couple grabs 46a, 46b from the balls 59a, 59b. Since the fastening frame 6 is still fastened to the tractor 1 via the joint structure, such as a three-way-tip-joint for instance, acting at the rear part 6" of the fastening frame 6, the lower blade 5 may be guided, enabled by the clearance in the locking device 13 of the rear part 6" of the fastening frame 6, into a position that the lower blade 5 and the front part 6' of the fastening frame 6 rest heavily on the ground.

Next, the locking device 13 of the rear part 6" of the fastening frame 6 may be unlocked by moving the locking collar 56 away from around the fastening ball 53, in which case by further guiding the position of the lower blade 5 the notch 58 of the ball tulip 54 moves away from the ball-like portion 57 of the fastening ball 53. Alternatively, the tractor 1 may be moved slightly backwards at this stage. Next, the position of the lower blade 5 is further guided such that the frame structure 7 of the fastening frame 6 lowers to the ground. Before the tractor 1 is moved in its entirety away from above the fastening frame 6 lowered to the ground and the lower blade 5 fastened thereto, the wires and/or tubes to hydraulic cylinders and/or other actuators in the fastening frame 6 are detached from a control panel located in the tractor 1. Said wires and/or tubes may be connected to said control panel for instance by quick couplings. The tractor 1 may be moved away from above the fastening frame 6 by driving either the front wheels or the rear wheels of the tractor 1 directly over the ends 5', 5" of the lower blade 5 or over ramps placed across the ends 5', 5" of the lower blade 5. Alternatively, the fastening frame 6 and the lower blade 5 therein could also be lowered on to a surface provided with wheels and capable of being moved away from underneath the tractor 1.

When the fastening frame 6 and the lower blade 5 therein are fastened to the tractor 1, the aforementioned process steps are carried out in a reverse order.

Depending on the embodiment of the fastening frame 6, the locking devices 12a, 12b disclosed above as the locking devices of the front part 6' of the fastening frame 6 could also be used as locking devices of the rear part 6" of the fastening frame 6, and the locking device 13 disclosed as the locking device of the rear part 6" of the fastening frame 6 could also be used as the locking device of the front part 6' of the fastening frame 6. In such a case, the first locking device part 35a, 35b of the locking device 12a, 12b could be fastened at the rear part 6" of the tractor 1 for instance to the frame 2 or the rear axle 3 of the tractor 1, and the first locking device part 50 of the locking device 13 could be fastened at the front part of the tractor 1 for instance in connection with the frame of the motor of the tractor 1 or to the frame 2 of the tractor 1.

An advantage of the disclosed fastening frame 6 is that it is easy and quick to detach from the tractor 1 and fasten to the tractor 1, in which case the lower blade 5 can be easily and quickly detached from the tractor 1 and fastened to the tractor 1. In such a case, a tractor 1 provided with a lower blade 5 is easily and quickly convertible into a tractor suitable to field or forest work, the lower blade 5 not restricting the ground clearance of the tractor 1. Since the fastening frame is fastened in connection with the frame of the tractor, the frame of the motor and/or the rear axle, a drawhook typically provided in the tractor 1 will be further available to be used for connecting for instance a trailer or another accessory to the tractor 1.

Corresponding advantages are achievable by using the fastening frame 6 in connection with other work vehicles.

A person skilled in the art will find it obvious that, as technology advances, the basic idea of the invention may be implemented in many different ways. The invention and its embodiments are thus not restricted to the above examples but may vary within the scope of the claims.

In the embodiment shown in the figures, the fastening frame 6 is arranged in a tractor 1 but, as already discussed above, the disclosed fastening frame may also be used in other work machines or trucks.

## Claims

1. A fastening frame (6) for a work vehicle for providing the work vehicle with at least one lower blade (5), **characterized in that** the fastening frame (6) comprises
a frame structure (7) having a front part (7') to be directed in a direction of a front end of the work vehicle, and a rear part (7") to be directed in a direction of a rear end of the work vehicle,
at least one locking device of a front part (6') of the fastening frame (6) arranged in connection with the front part (7') of the frame structure (7) for fastening the fastening frame (6) at its front part (6') to the work vehicle,
at least one locking device of a rear part (6") of the fastening frame (6) arranged in connection with the rear part (7") of the frame structure (7) for fastening the fastening frame (6) at its rear part (6") to the work vehicle, and
means for fastening the lower blade (5) to the fastening frame (6), wherein
the locking device of the front part (6') comprises a first locking device part to be fastened to the work vehicle and a second locking device part detachable from the first locking device part and fastened to the frame structure (7) of the fastening frame (6), and wherein the locking device of the rear part (6") comprises a first locking device part to be fastened to the work vehicle and a second locking device part detachable from the first locking device part and fastened to the frame structure (7) of the fastening frame (6).

2. A fastening frame as claimed in claim 1, **characterized in that** the fastening frame (6) comprises two locking devices of the front part (6') of the fastening frame (6) which comprise first locking device parts to be fastened on opposite sides of a frame (2) of the work vehicle in a width direction of the work vehicle.

3. A fastening frame as claimed in claim 1 or 2, **character-ized** in that the first locking device part of the locking device of the front part (6') of the fastening frame (6) comprises a tilting leg (40a, 40b) for tilting the fastening frame (6) with respect to the work vehicle.

4. A fastening frame as claimed in any one of the preceding claims, **characterized in that** the first locking device part of the locking device of the front part (6') of the fastening frame (6) comprises a fastening flange structure (37a, 37b) to be fastened to the work vehicle and a support element (42a, 42b) arranged in connection with the fastening flange structure (37a, 37b), and that the second locking device part comprises a locking element fastening in connection with the support element (42a, 42b).

5. A fastening frame as claimed in claim 4, **characterized in that** the support element (42a, 42b) comprises a support pin (43a, 43b) and a ball (59a, 59b) arranged in connection with the support pin (43a, 43b), and that the locking element comprises a quick couple grab (46a, 46b) locking with said ball (59a, 59b).

6. A fastening frame as claimed in any one of the preceding claims, **characterized in that** the fastening frame (6) comprises one locking device of the rear part (6") of the fastening frame (6) which comprises a first locking device part and a second locking device part and a joint structure formed therebetween.

7. A fastening frame as claimed in claim 6, **characterized in that** the joint structure is a three-way-tip joint structure.

8. A fastening frame as claimed in any one of the preceding claims, **characterized in that** the first locking device part of the locking device of the rear part (6") of the fastening frame (6) comprises a ball frame (52) to be fastened to the work vehicle and a fastening ball (53) fastened to the ball frame (52) and pointing downwards therefrom, and that the second locking device part of the locking device of the rear part (6") of the fastening frame (6) comprises a ball tulip (54) fastened in connection with the rear part (7") of the frame structure (7) of the fastening frame (6) and arranged to receive the fastening ball (53) and in connection with which is arranged a turnable locking collar (56) to be turned in connection with the fastening ball (53) for locking the fastening ball (53) to the ball tulip (54).

9. A fastening frame as claimed in claim 8, **characterized in that** an outermost end (53') of the fastening ball (53) comprises a ball-like portion (57) and outermost end (54') of the ball tulip (54) comprises a notch (58) which corresponds to the ball-like portion (57) and in which the ball-like portion (57) of the fastening ball (53) is arranged to settle as the ball tulip (54) receives the fastening ball (53).

10. A work vehicle, **characterized in that** the work vehicle comprises a fastening frame (6) according to any one of claims 1 to 9.

11. A work vehicle as claimed in claim 10, **characterized in that** the work vehicle is a tractor (1).

12. A work vehicle as claimed in claim 10 or 11, **character-ized** in that the work vehicle further comprises at least one lower blade (5) fastened to the fastening frame (6).
